# FASCICULE DE BREVET EUROPEEN

(11) **EP 4 596 949 B1**
(45) Date de publication et mention de la délivrance du brevet: **09.09.2026**
(21) Numéro de dépôt: 25154710.5
(22) Date de dépôt: 29.01.2025
(51) Int. Cl.: F17C 7/00

(54) **COLLECTEUR HYDRAULIQUE**
HYDRAULISCHER VERTEILER
HYDRAULIC MANIFOLD

(30) Priorité: 31.01.2024 FR 2400947
(43) Date de publication de la demande: 06.08.2025
(73) Titulaire: Faurecia Hydrogen Solutions France, 92000 Nanterre (FR)
(72) Inventeur: NAULIN, Edouard, 90000 Belfort (FR); ICARD, Sullivan, 25480 Ecole Valentin (FR)
(74) Mandataire: Lavoix

(56) Documents cités:
- EP-A1- 3 680 543
- WO-A1-2023/147830
- CN-U- 215 335 774
- JP-A- 2003 172 497

## Description

### Domaine technique

L'invention concerne un collecteur hydraulique, du type apte à mettre en communication plusieurs réservoirs, particulièrement de gaz sous pression, plus particulièrement d'hydrogène, de manière à communaliser et à centraliser le remplissage et/ou le puisage desdits réservoirs.

### Technique antérieure

Il est connu de connecter plusieurs réservoirs élémentaires à un collecteur de manière à communaliser et à centraliser le remplissage et le puisage des réservoirs, afin de former un grand réservoir global modulaire.

A l'entrée de chaque réservoir élémentaire est généralement équipée une vanne, préférentiellement une électrovanne, de manière à pouvoir isoler un réservoir élémentaire du réservoir global et à piloter quel(s) réservoir(s) élémentaire(s) est(sont) puisé(s).

De manière connue, un collecteur forme un volume de mélange commun auquel sont connectés les différents réservoirs.

Il est courant d'utiliser une électrovanne à action semi directe en entrée d'un réservoir élémentaire. Une telle électrovanne à action semi directe est avantageuse pour son excellent rapport coût/performance. Cependant, lorsque la pression différentielle entre l'amont de l'électrovanne, côté réservoir, et l'aval de l'électrovanne, côté collecteur, est très importante, il peut apparaître une difficulté à ouvrir l'électrovanne, qui peine à s'ouvrir en entier ou refuse de s'ouvrir, alors même que la commande électrique demande une ouverture. Une telle pression différentielle peut s'installer, soit suite à un remplissage et/ou un puisage différentié important d'un réservoir relativement aux autres ou sous l'effet de contraintes thermiques que les réservoirs ne subissent pas de manière égale, du fait de leurs caractéristiques thermiques et/ou dimensions respectives différentes.

Aussi, il est souhaité un collecteur hydraulique qui permette de connecter des réservoirs élémentaires, pouvant être différents, et apte à compartimenter les pressions entre des séries de réservoirs de caractéristiques thermiques et/ou dimensions respectives similaires, afin que la pression différentielle entre amont et aval d'une électrovanne n'atteigne pas des valeurs trop importantes risquant de l'empêcher de correctement s'ouvrir.

EP 3 680 543 A1 décrit un dispositif de remplissage des réservoirs de gaz sous pression.

### Résumé de l'invention

Pour cela, l'invention a pour objet un collecteur hydraulique de mise en relation fluidique d'au moins deux séries de réservoirs comprenant au moins une entrée de remplissage et au moins une sortie de puisage, une canalisation de remplissage, une canalisation de puisage et autant de canalisations de branche que de séries de réservoirs, la canalisation de remplissage comprenant une connexion avec ladite au moins une entrée de remplissage et une liaison avec une entrée de chacune des canalisations de branche, la canalisation de puisage comprenant une liaison avec une sortie de chacune des canalisations de branche et une connexion avec ladite au moins une sortie de puisage, une première canalisation de branche comprenant, à son entrée, une liaison à la canalisation de remplissage, via un premier clapet anti-retour amont, passant dans le sens allant de la canalisation de remplissage vers la première canalisation de branche et, à sa sortie, une liaison à la canalisation de puisage via un premier clapet anti-retour aval, passant dans le sens allant de la première canalisation de branche vers la canalisation de puisage et comprenant encore, entre le premier clapet anti-retour amont et le premier clapet anti-retour aval, au moins une première connexion à un réservoir de la première série, et au moins une deuxième canalisation de branche comprenant, à son entrée, une liaison à la canalisation de remplissage via un deuxième clapet anti-retour amont, passant dans le sens allant de la canalisation de remplissage vers la deuxième canalisation de branche et, à sa sortie, une liaison à la canalisation de puisage via un deuxième clapet anti-retour aval, passant dans le sens allant de la deuxième canalisation de branche vers la canalisation de puisage et comprenant encore, entre le deuxième clapet anti-retour amont et le deuxième clapet anti-retour aval, au moins une deuxième connexion à un réservoir de ladite au moins une deuxième série.

Des caractéristiques ou des modes de réalisation particuliers, utilisables seuls ou en combinaison, sont :
- chaque réservoir est connecté au collecteur hydraulique via une électrovanne de type semi-direct,
- une série de réservoirs regroupe des réservoirs de caractéristiques thermiques voisines,
- des réservoirs de caractéristiques thermiques voisines sont des réservoirs dont les ratios diamètre sur longueur sont sensiblement identiques,
- un collecteur hydraulique est réalisé monobloc,
- un collecteur hydraulique est réalisé de manière modulaire, avec un module de base et au moins un module additionnel, le module de base comprenant une canalisation de remplissage, une canalisation de puisage et une première canalisation de branche, la canalisation de remplissage comprenant une connexion avec l'entrée de remplissage, une liaison avec l'entrée de la première canalisation de branche, et une première connexion amont d'extension, la canalisation de puisage comprenant une liaison avec la sortie de la première canalisation de branche, une connexion avec la sortie de puisage, et une première connexion avale d'extension, la première canalisation de branche étant inchangée, le module additionnel comprenant une deuxième canalisation de branche inchangée, comprenant encore, à son entrée, une deuxième connexion amont d'extension complémentaire de la première connexion amont d'extension et, à sa sortie, une deuxième connexion avale d'extension complémentaire de la première connexion avale d'extension,
- une canalisation de branche comprend un capteur de pression.

### Brève description des dessins

L'invention sera mieux comprise à la lecture de la description qui suit, faite uniquement à titre d'exemple, et en référence aux figures en annexe dans lesquelles :
[Fig. 1] montre, en vue perspective, un collecteur selon l'invention,
[Fig. 2] montre, en vue schématique, un collecteur monobloc selon l'invention,
[Fig. 3] montre, en vue schématique, un collecteur modulaire selon l'invention,
[Fig. 4] montre, en vue schématique, un collecteur connecté à des réservoirs.

### Description des modes de réalisation

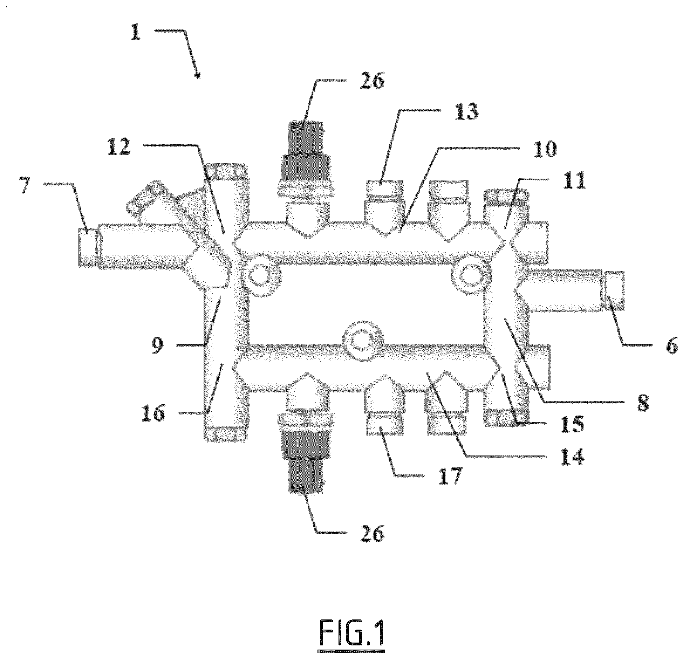

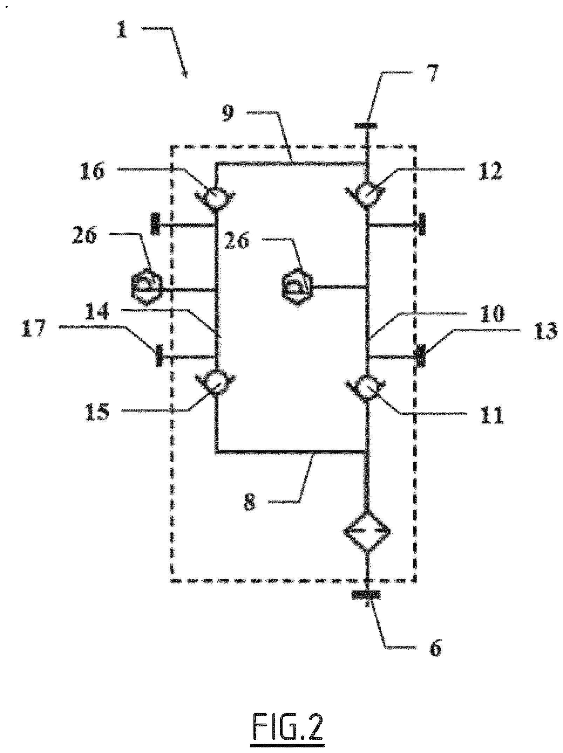

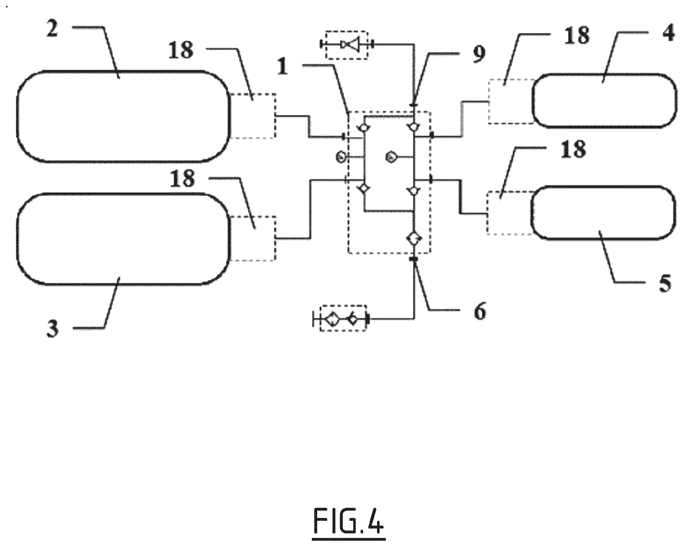

En référence aux figures 1-4, l'invention concerne un collecteur hydraulique 1. Un tel collecteur hydraulique 1 est destiné à mettre en relation fluidique au moins deux séries de réservoirs 2-5. Pour cela, un collecteur 1 forme un contenant fermé apte à contenir un fluide, tel un gaz sous pression, préférentiellement de l'hydrogène. Ce contenant comprend au moins une entrée de remplissage 6, afin de pouvoir être rempli. Il comprend encore au moins une sortie de puisage 7, afin de pouvoir être vidé.

Selon une caractéristique, le collecteur 1 comprend encore une canalisation de remplissage 8, une canalisation de puisage 9 et autant de canalisations de branche 10, 14 que de séries de réservoirs 2-5. Le contenant est réalisé par connexion de la canalisation de remplissage 8, de la canalisation de puisage 9 et desdites au moins deux canalisations de branche 10, 14, de manière étanche. Les canalisations de branche 10, 14 sont des canalisations sensiblement linéaires, comprenant deux embouchures, une à chaque extrémité, que l'on nomme entrée et sortie. Il y a une canalisation de branche 10, 14 par série de réservoir 2-5. Les réservoirs 2-5 sont organisés en séries, une série pouvant comprendre de un à n réservoirs 2-5. Les canalisations de branche 10, 14 sont connectées en parallèle au moyen de la canalisation de remplissage 8 et de la canalisation de puisage 9.

La canalisation de remplissage 8 comprend une connexion avec ladite au moins une entrée de remplissage 6. Chaque entrée de remplissage 6 est connectable à un fournisseur de fluide. La canalisation de remplissage 8 comprend encore une liaison avec l'entrée de chacune des canalisations de branche 10, 14. La canalisation de remplissage 8 peut ainsi être remplie via une de ses entrées de remplissage 6 et à son tour remplir les canalisations de branches 10, 14, via leur entrée respective.

De manière duale, la canalisation de puisage 9 comprend une liaison avec une sortie de chacune des canalisations de branche 10, 14. La canalisation de puisage 9 comprend encore une connexion avec ladite au moins une sortie de puisage 7. Chaque sortie de puisage 7 est connectable à un consommateur de fluide. Les canalisations de branches 10, 14 peuvent ainsi alimenter la canalisation de puisage 9 qui peut alors délivrer du fluide via une de ses sorties de puisage 7.

Une première canalisation de branche 10 comprend, à son entrée, une liaison à la canalisation de remplissage 8 et, à sa sortie, une liaison à la canalisation de puisage 9. Afin d'isoler et de protéger la première canalisation de branche 10, la liaison d'entrée s'effectue via un clapet 11, que l'on nomme premier clapet anti-retour amont 11, puisqu'il est situé à l'amont de la première canalisation de branche 10. Ce premier clapet anti-retour amont 11 est orienté de manière à être passant dans le sens allant de la canalisation de remplissage 8 vers la première canalisation de branche 10. De même, la liaison de sortie s'effectue via un clapet 12, que l'on nomme premier clapet anti-retour aval 12, puisqu'il est situé à l'aval de la première canalisation de branche 10. Ce premier clapet anti-retour aval 12 est orienté de manière à être passant dans le sens allant de la première canalisation de branche 10 vers la canalisation de puisage 9.

La première canalisation de branche 10 comprend encore, entre le premier clapet anti-retour amont 11 et le premier clapet anti-retour aval 12, au moins une première connexion 13. Cette au moins une première connexion 13 permet de connecter et de relier fluidiquement un réservoir 2-5 au collecteur 1. Les réservoirs 2-5 d'une première série peuvent ainsi être connectés à la première canalisation de branche 10.

Ladite au moins une deuxième canalisation de branche 14 comprend, à son entrée, une liaison à la canalisation de remplissage 8 et, à sa sortie, une liaison à la canalisation de puisage 9. Afin d'isoler et de protéger ladite au moins une deuxième canalisation de branche 14, la liaison d'entrée s'effectue via un clapet 15, que l'on nomme deuxième clapet anti-retour amont 15, puisqu'il est situé à l'amont de la deuxième canalisation de branche 14. Ce deuxième clapet anti-retour amont 15 est orienté de manière à être passant dans le sens allant de la canalisation de remplissage 8 vers la deuxième canalisation de branche 14. De même, la liaison de sortie s'effectue via un clapet 16 que l'on nomme deuxième clapet anti-retour aval 16, puisqu'il est situé à l'aval de la deuxième canalisation de branche 14. Ce deuxième clapet anti-retour aval 16 est orienté de manière à être passant dans le sens allant de la deuxième canalisation de branche 14 vers la canalisation de puisage 9.

Ladite au moins une deuxième canalisation de branche 14 comprend encore, entre le deuxième clapet anti-retour amont 15 et le deuxième clapet anti-retour aval 16, au moins une deuxième connexion 17. Cette au moins une deuxième connexion 17 permet de connecter et de relier fluidiquement un réservoir 2-5 au collecteur 1. Les réservoirs 2-5 d'une deuxième série peuvent ainsi être connectés à la deuxième canalisation de branche 14.

Ceci permet de séparer, en termes de pression, les réservoirs d'une première série des réservoirs d'une deuxième série. Chaque canalisation de branche 10, 14 permet de regrouper des réservoirs 2-5 au sein d'une série et de les isoler et protéger des réservoirs des autres séries. Les clapets anti-retours 11, 12, 15, 16 séparant les canalisations de branche 10, 14 les unes des autres, permettent de protéger les réservoirs 2-5 d'une série à l'autre en empêchant une pression importante apparaissant dans une série de venir perturber une autre série moins pressurisée.

Chaque réservoir 2-5 est connecté au collecteur hydraulique 1, au moyen d'une connexion 13, 17, via une électrovanne 18. Une telle électrovanne 18 permet d'isoler le réservoir 2-5 associé et ainsi d'en contrôler sélectivement le remplissage et/ou le puisage. Selon une autre caractéristique, cette électrovanne 18 est de type semi-direct. Une électrovanne 18 de type semi-direct est classiquement utilisée car elle présente un ratio coût performance avantageux. Une telle électrovanne 18, du fait qu'elle fonctionne à deux étages, peut rester incomplètement ouverte ou entièrement fermée en cas de présence d'une contre pression importante à son aval, soit du côté collecteur 1, opposé au réservoir 2-5. Afin d'évacuer un tel inconvénient, il est important de garantir que la pression à l'aval de l'électrovanne 18 n'est pas trop importante, relativement à la pression du réservoir 2-5.

Lors d'un remplissage ou d'un puisage, la pression s'équilibre sensiblement entre les réservoirs 2-5 et le collecteur 1 et le problème précité ne peut pas apparaitre.

Selon l'art antérieur, le problème risque plutôt d'apparaitre dans la situation suivante. Au moins deux réservoirs 2-5 sont connectés de manière libre, sans clapet, à un collecteur 1. Les deux réservoirs 2-5 présentes des caractéristiques thermiques et/ou dimensions respectives différentes. Aussi, lors d'une variation thermique, due par exemple à une exposition au soleil ou à une variation de température pour toute autre raison, la pression au sein d'un réservoir 2-5 évolue différemment de la pression au sein d'un autre réservoir 2-5.

Après un remplissage ou un puisage, il s'ensuit une période d'échange thermique entre les réservoirs 2-5 avec l'air ambiant, ainsi qu'entre le collecteur 1 avec l'air ambiant. Au terme de cette échange, la pression interne est différente entre le collecteur 1 et les réservoirs 2-5. Ainsi, le différentiel de pression aux bornes de l'électrovanne 18 est différent entre les réservoirs 2-5 présentant des caractéristiques thermiques et/ou dimensions respectives différentes. Suite à une commande de puisage, l'ouverture des électrovannes 18 ayant la plus grande pression différentielle sera empêchée ou entravée.

Selon l'invention, le collecteur 1, grâce à ses clapets anti-retour 11, 12, 15, 16, permet de cloisonner, au niveau de chaque canalisation de branche 10, 14, des secteurs de pression. Aussi, en ne connectant à une même canalisation de branche 10, 14, que des réservoirs 2-5 présentant des caractéristiques thermiques similaires le problème est évité.

Aussi, selon une autre caractéristique, une série de réservoirs, soit les réservoirs 2-5 connectés à une même canalisation de branche 10, 14, regroupe avantageusement des réservoirs 2-5 de caractéristiques thermiques voisines.

On entend ici par caractéristiques thermiques toute caractéristique qui peut, activement ou passivement, conduire à modifier la pression au sein d'un réservoir 2-5.

A titre d'exemple, des réservoirs 2-5 de caractéristiques thermiques voisines, avantageusement groupés au sein d'une même série, sont des réservoirs dont les dimensions sont similaires. Ces dimensions peuvent être choisies différemment. Soumis à une variation de température, des réservoirs, au choix, de même diamètre, de même longueur, de même volume ou de même surface d'échange présentent une variation de pression comparable et restent ainsi dans une possible utilisation cohérente permettant aux électrovannes 18 de fonctionner correctement. Ces différents critères dimensionnels, dans une plage de température donnée, peuvent être utilisés pour regrouper des réservoirs 2-5 au sein d'un série connectée à une même canalisation de branche 10, 14.

Plus précisément, selon un critère préférentiel, le ratio diamètre sur longueur du réservoir 2-5 est utilisé pour regrouper des réservoirs 2-5 au sein d'une série.

Plusieurs modes de réalisation sont possibles pour le collecteur 1.

Selon un premier mode de réalisation, plus particulièrement illustré aux figures 1, 2 et 4, un collecteur 1 est réalisé monobloc.

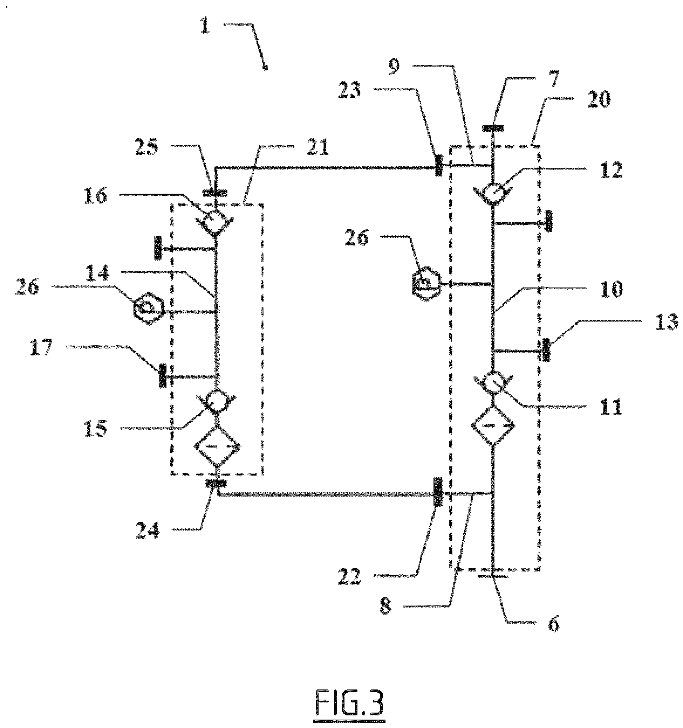

Selon un autre mode de réalisation, plus particulièrement illustré à la figure 3, un collecteur 1 est réalisé de manière modulaire, avec un module de base 20 et au moins un module additionnel 21. L'ajout de modules additionnels 21 permet d'ajouter autant de canalisations de branche 14 supplémentaires, que souhaité.

Le module de base 20 comprend une canalisation de remplissage 8, une canalisation de puisage 9 et une première canalisation de branche 10. La canalisation de remplissage 8 comprend une connexion avec l'entrée de remplissage 6, une liaison avec l'entrée de la première canalisation de branche 10, et une première connexion amont d'extension 22. La canalisation de puisage 9 comprend une liaison avec la sortie de la première canalisation de branche 10, une connexion avec la sortie de puisage 7, et une première connexion avale d'extension 23. La première canalisation de branche 10 est inchangée, relativement à la précédente description. Elle comprend un premier clapet anti-retour amont 11, un deuxième clapet anti-retour aval 12 et au moins une première connexion réservoir 13, entre les deux clapets 11, 12.

Un module additionnel 21 comprend une deuxième canalisation de branche 14 inchangée, relativement à la précédente description. Elle comprend un deuxième clapet anti-retour amont 15, un deuxième clapet anti-retour aval 16 et au moins une deuxième connexion réservoir 17, entre les deux clapets 15, 16. Un module additionnel 21 comprend encore, à son entrée, une deuxième connexion amont d'extension 24 complémentaire de la première connexion amont d'extension 22, afin de pouvoir s'y connecter en créant une connexion fluidique. De même, à sa sortie, un module additionnel 21 comprend une deuxième connexion avale d'extension 25 complémentaire de la première connexion avale d'extension 23, afin de pouvoir s'y connecter en créant une connexion fluidique.

En cas de modules additionnels 21 multiples, la connexion amont 24, respectivement, la connexion avale 25, d'un précédent module additionnel 21 est connectée à la connexion amont 24, respectivement, la connexion avale 25, d'un module additionnel 21 suivant. Les modules additionnels 21 sont connectées en parallèle.

Selon une autre caractéristique, une canalisation de branche 10, 14 comprend un capteur de pression 26. Un tel capteur de pression 26 est utilisé à des fins de pilotage du remplissage et/ou du puisage ou encore à des fins de sécurité, afin de vérifier que la pression ne devient pas trop importante.

L'invention a été illustrée et décrite en détail dans les dessins et la description précédente. Celle-ci doit être considérée comme illustrative et donnée à titre d'exemple et non comme limitant l'invention à cette seule description. De nombreuses variantes de réalisation sont possibles, à condition qu'elles ne sortent pas du cadre de l'invention.

### Liste des signes de référence

1 : collecteur,
2-5 : réservoir,
6 : entrée de remplissage,
7 : sortie de puisage,
8 : canalisation de remplissage,
9 : canalisation de puisage,
10 : première canalisation de branche,
11 : premier clapet anti-retour amont,
12 : premier clapet anti-retour aval,
13 : première connexion réservoir,
14 : deuxième canalisation de branche,
15 : deuxième clapet anti-retour amont,
16 : deuxième clapet anti-retour aval,
17 : deuxième connexion réservoir,
18 : électrovanne,
20 : module de base,
21 : module additionnel,
22 : première connexion amont d'extension,
23 : première connexion avale d'extension,
24 : deuxième connexion amont d'extension,
25 : deuxième connexion avale d'extension,
26 : capteur de pression.

## Revendications

1. Collecteur hydraulique (1) de mise en relation fluidique d'au moins deux séries de réservoirs (2-5) comprenant au moins une entrée de remplissage (6) et au moins une sortie de puisage (7), le collecteur hydraulique comprenant encore une canalisation de remplissage (8), une canalisation de puisage (9) et autant de canalisations de branche (10, 14) que de séries de réservoirs (2-5), la canalisation de remplissage (8) comprenant une connexion avec ladite au moins une entrée de remplissage (6) et une liaison avec une entrée de chacune des canalisations de branche (10, 14), la canalisation de puisage (9) comprenant une liaison avec une sortie de chacune des canalisations de branche (10, 14) et une connexion avec ladite au moins une sortie de puisage (7), **caractérisé en ce que** le collecteur hydraulique comprend une première canalisation de branche (10) comprenant, à son entrée, une liaison à la canalisation de remplissage (8), via un premier clapet anti-retour amont (11), passant dans le sens allant de la canalisation de remplissage (8) vers la première canalisation de branche (10) et, à sa sortie, une liaison à la canalisation de puisage (9) via un premier clapet anti-retour aval (12), passant dans le sens allant de la première canalisation de branche (10) vers la canalisation de puisage (9) et comprenant encore, entre le premier clapet anti-retour amont (11) et le premier clapet anti-retour aval (12), au moins une première connexion (13) à un réservoir (2-5) de la première série, et au moins une deuxième canalisation de branche (14) comprenant, à son entrée, une liaison à la canalisation de remplissage (8) via un deuxième clapet anti-retour amont (15), passant dans le sens allant de la canalisation de remplissage (8) vers la deuxième canalisation de branche (14) et, à sa sortie, une liaison à la canalisation de puisage (9) via un deuxième clapet anti-retour aval (16), passant dans le sens allant de la deuxième canalisation de branche (14) vers la canalisation de puisage (9) et comprenant encore, entre le deuxième clapet anti-retour amont (15) et le deuxième clapet anti-retour aval (16), au moins une deuxième connexion (17) à un réservoir (2-5) de ladite au moins une deuxième série.

2. Collecteur hydraulique (1) selon la revendication 1, où chaque réservoir (2-5) est connecté au collecteur hydraulique (1) via une électrovanne (18) de type semi-direct.

3. Collecteur hydraulique (1) selon l'une quelconque des revendications 1 ou 2, où une série de réservoirs regroupe des réservoirs (2-5) de caractéristiques thermiques voisines.

4. Collecteur hydraulique (1) selon la revendication 3, où des réservoirs (2-5) de caractéristiques thermiques voisines sont des réservoirs dont les ratios diamètre sur longueur sont sensiblement identiques.

5. Collecteur hydraulique (1) selon l'une quelconque des revendications 1 à 4, réalisé monobloc.

6. Collecteur hydraulique (1) selon l'une quelconque des revendications 1 à 4, réalisé de manière modulaire, avec un module de base (20) et au moins un module additionnel (21), le module de base (20) comprenant une canalisation de remplissage (8), une canalisation de puisage (9) et une première canalisation de branche (10), la canalisation de remplissage (8) comprenant une connexion avec l'entrée de remplissage (6), une liaison avec l'entrée de la première canalisation de branche (10), et une première connexion amont d'extension (22), la canalisation de puisage (9) comprenant une liaison avec la sortie de la première canalisation de branche (10), une connexion avec la sortie de puisage (7), et une première connexion avale d'extension (23), la première canalisation de branche (10) étant inchangée, le module additionnel (21) comprenant une deuxième canalisation de branche (14) inchangée, comprenant encore, à son entrée, une deuxième connexion amont d'extension (24) complémentaire de la première connexion amont d'extension (22) et, à sa sortie, une deuxième connexion avale d'extension (25) complémentaire de la première connexion avale d'extension (23).

7. Collecteur hydraulique (1) selon l'une quelconque des revendications 1 à 6, où une canalisation de branche (10, 14) comprend un capteur de pression (26).

## Patentansprüche

1. Hydraulikkollektor (1) zur fluidischen Inbeziehungsetzung von mindestens zwei Serien von Behältern (2-5), umfassend mindestens einen Fülleinlass (6) und mindestens einen Entnahmeauslass (7), wobei der Hydraulikkollektor ferner eine Füllleitung (8), eine Entnahmeleitung (9) und ebenso viele Zweigleitungen (10, 14) wie Serien von Behältern (2-5) umfasst, wobei die Füllleitung (8) einen Anschluss mit dem genannten mindestens einen Fülleinlass (6) und eine Verbindung mit einem Eingang jeder der Zweigleitungen (10, 14) umfasst, wobei die Entnahmeleitung (9) eine Verbindung mit einem Ausgang jeder der Zweigleitungen (10, 14) und einen
Anschluss mit dem genannten mindestens einen Entnahmeauslass (7) umfasst, **dadurch gekennzeichnet, dass** der Hydraulikkollektor eine erste Zweigleitung (10) umfasst, umfassend, an ihrem Eingang, eine Verbindung mit der Füllleitung (8) über ein erstes stromaufwärtiges Rückschlagventil (11), das in der Richtung durchlässt, die von der Füllleitung (8) zu der ersten Zweigleitung (10) geht, und, an ihrem Ausgang, eine Verbindung mit der Entnahmeleitung (9) über ein erstes stromabwärtiges Rückschlagventil (12), das in der Richtung durchlässt, die von der ersten Zweigleitung (10) zu der Entnahmeleitung (9) geht, und ferner, zwischen dem ersten stromaufwärtigen Rückschlagventil (11) und dem ersten stromabwärtigen Rückschlagventil (12), mindestens einen ersten Anschluss (13) an einen Behälter (2-5) der ersten Serie umfasst, und mindestens eine zweite Zweigleitung (14), umfassend, an ihrem Eingang, eine Verbindung mit der Füllleitung (8) über ein zweites stromaufwärtiges Rückschlagventil (15), das in der Richtung durchlässt, die von der Füllleitung (8) zu der zweiten Zweigleitung (14) geht, und, an ihrem Ausgang, eine Verbindung mit der Entnahmeleitung (9) über ein zweites stromabwärtiges Rückschlagventil (16), das in der Richtung durchlässt, die von der zweiten Zweigleitung (14) zu der Entnahmeleitung (9) geht, und ferner, zwischen dem zweiten stromaufwärtigen Rückschlagventil (15) und dem zweiten stromabwärtigen Rückschlagventil (16), mindestens einen zweiten Anschluss (17) an einen Behälter (2-5) der genannten mindestens einen zweiten Serie umfasst.

2. Hydraulikkollektor (1) nach Anspruch 1, wobei jeder Behälter (2-5) mit dem Hydraulikkollektor (1) über ein Magnetventil (18) vom halbdirekten Typ verbunden ist.

3. Hydraulikkollektor (1) nach einem der Ansprüche 1 oder 2, wobei eine Serie von Behältern Behälter (2-5) mit ähnlichen thermischen Eigenschaften gruppiert.

4. Hydraulikkollektor (1) nach Anspruch 3, wobei Behälter (2-5) mit ähnlichen thermischen Eigenschaften Behälter sind, deren Verhältnisse Durchmesser zu Länge im Wesentlichen identisch sind.

5. Hydraulikkollektor (1) nach einem der Ansprüche 1 bis 4, einstückig ausgeführt.

6. Hydraulikkollektor (1) nach einem der Ansprüche 1 bis 4, modular ausgeführt, mit einem Basismodul (20) und mindestens einem Zusatzmodul (21), wobei das Basismodul (20) eine Füllleitung (8), eine Entnahmeleitung (9) und eine erste Zweigleitung (10) umfasst, wobei die Füllleitung (8) einen Anschluss mit dem Fülleinlass (6), eine Verbindung mit dem Eingang der ersten Zweigleitung (10), und einen ersten stromaufwärtigen Erweiterungsanschluss (22) umfasst, wobei die Entnahmeleitung (9) eine Verbindung mit dem Ausgang der ersten Zweigleitung (10), einen Anschluss mit dem Entnahmeauslass (7), und einen ersten stromabwärtigen Erweiterungsanschluss (23) umfasst, wobei die erste Zweigleitung (10) unverändert ist, wobei das Zusatzmodul (21) eine zweite unveränderte Zweigleitung (14) umfasst, ferner umfassend, an ihrem Eingang, einen zweiten stromaufwärtigen Erweiterungsanschluss (24), der komplementär zu dem ersten stromaufwärtigen Erweiterungsanschluss (22) ist, und, an ihrem Ausgang, einen zweiten stromabwärtigen Erweiterungsanschluss (25), der komplementär zu dem ersten stromabwärtigen Erweiterungsanschluss (23) ist.

7. Hydraulikkollektor (1) nach einem der Ansprüche 1 bis 6, wobei eine Zweigleitung (10, 14) einen Drucksensor (26) umfasst.

## Claims

1. A hydraulic manifold (1) for fluidly connecting at least two series of tanks (2-5) comprising at least one filling inlet (6) and at least one emptying outlet (7), **characterized in that** it further comprises a filling pipe (8), an emptying pipe (9) and the same number of branch pipes (10, 14) as there are series of tanks (2-5), the filling pipe (8) comprising a connection to said at least one filling inlet (6) and a connection to an inlet of each of the branch pipes (10, 14), the emptying pipe (9) comprising a connection to an outlet of each of the branch pipes (10, 14) and a connection to said at least one emptying outlet (7), a first branch pipe (10) comprising, at its inlet, a connection to the filling pipe (8), via a first upstream non-return valve (11), going in the direction from the filling pipe (8) to the first branch pipe (10) and, at its outlet, a connection to the emptying pipe (9) via a first downstream non-return valve (12), going in the direction from the first branch pipe (10) to the emptying pipe (9) and further comprising, between the first upstream non-return valve (11) and the first downstream non-return valve (12), at least one first connection (13) to a tank (2-5) of the first series, and at least one second branch pipe (14) comprising, at its inlet, a connection to the filling pipe (8) via a second upstream non-return valve (15), going in the direction from the filling pipe (8) to the second branch pipe (14) and, at its outlet, a connection to the emptying pipe (9) via a second downstream non-return valve (16), going in the direction from the second branch pipe (14) to the emptying pipe (9) and further comprising, between the second upstream non-return valve (15) and the second downstream non-return valve (16), at least one second connection (17) to a tank (2-5) of said at least one second series.

2. The hydraulic manifold (1) as claimed in claim 1, wherein each tank (2-5) is connected to the hydraulic manifold (1) via a semi-direct solenoid valve (18).

3. The hydraulic manifold (1) as claimed in either one of claims 1 and 2, wherein a series of tanks groups tanks (2-5) with similar thermal characteristics together

4. The hydraulic manifold (1) as claimed in claim 3, wherein tanks (2-5) with similar thermal characteristics are tanks with substantially identical diameter-to-length ratios.

5. The hydraulic manifold (1) as claimed in any one of claims 1 to 4, made in one piece.

6. The hydraulic manifold (1) as claimed in any one of claims 1 to 4, of modular design, with a base module (20) and at least one add-on module (21), the base module (20) comprising a filling pipe (8), an emptying pipe (9) and a first branch pipe (10), the filling pipe (8) comprising a connection to the filling inlet (6), a connection to the inlet of the first branch pipe (10), and a first upstream extension connection (22), the emptying pipe (9) comprising a connection to the outlet of the first branch pipe (10), a connection to the emptying outlet (7), and a first downstream extension connection (23), the first branch pipe (10) being unchanged, the add-on module (21) comprising an unchanged second branch pipe (14), further comprising, at its inlet, a second upstream extension connection (24) complementary to the first upstream extension connection (22) and, at its outlet, a second downstream extension connection (25) complementary to the first downstream extension connection (23).

7. The hydraulic manifold (1) as claimed in any one of claims 1 to 6, wherein a branch pipe (10, 14) comprises a pressure sensor (26).
